(19) Europäisches Patentamt
European Patent Office
Office européen des brevets

(11) **EP 1 618 517 B1**

(12) **EUROPEAN PATENT SPECIFICATION**

(45) Date of publication and mention
of the grant of the patent:
**31.03.2010 Bulletin 2010/13**

(51) Int Cl.:
***G06K 19/07*** *(2006.01)*

(21) Application number: **04760317.0**

(22) Date of filing: **22.04.2004**

(86) International application number:
**PCT/US2004/012328**

(87) International publication number:
**WO 2004/097731 (11.11.2004 Gazette 2004/46)**

(54) **EXTENDED RANGE RFID SYSTEM**

RFID-SYSTEM MIT VERGRÖSSERTER REICHWEITE

SYSTEME RFID A PORTEE ETENDUE

(84) Designated Contracting States:
**AT BE BG CH CY CZ DE DK EE ES FI FR GB GR
HU IE IT LI LU MC NL PL PT RO SE SI SK TR**

(30) Priority: **25.04.2003 GB 0309498**

(43) Date of publication of application:
**25.01.2006 Bulletin 2006/04**

(73) Proprietor: **AVERY DENNISON CORPORATION
Pasadena, CA 91103 (US)**

(72) Inventor: **FORSTER, Ian, J.
Chelmsford Essex 1G27BB (GB)**

(74) Representative: **Müller-Boré & Partner
Patentanwälte
Grafinger Strasse 2
81671 München (DE)**

(56) References cited:
**EP-A- 0 996 124          EP-A- 1 302 893
WO-A-00/23994          DE-A- 10 112 899
US-A1- 2002 175 818**

**Description**

TECHNICAL FIELD OF THE INVENTION

This invention relates to RFID systems, primarily for use with Compact Discs (CDs), Digital Versatile or Video Discs (DVDs) or Mini Discs.

BACKGROUND OF THE RELATED ART

It has previously been proposed to use Radio Frequency Identification (RFID) transponders with CDs or DVDs, and U. S. Patent Publication No. US2002/0175818A1 discloses such a device in Figs. 18 and 19. However, the disclosed device includes a central conductive area spaced apart from the normal conductive area by a narrow peripheral slot, so that the primary antenna configuration is that of a fairly small slot antenna, with severely limited range. The configuration also employs conducting tabs which extend to the periphery of the disc, but the predominant radiation is from the relatively small area slot antenna.
DE 101 12 899 A1 describes a label for use with a CD-ROM. An RFID transponder consisting of an RFID chip and an antenna is fully located between a center hole of the CD-ROM, and the CD-ROM's stacking ring. The stacking ring is part of the central portion of the CD-ROM that is free of readable conductive material. The stacking ring is a raised part of this central portion that aids in allowing CD-ROMs to be stacked without the readable portions touching each other.
EP 0 996 124 A1 discloses an optical disc that includes a recording medium and a memory device. The memory device includes electromagnetic coupling means for communication. The memory device may be placed overlying the recording medium, and the recording medium may act as a reflector for the electromagnetic coupling means.
EP-A-1 302 893 discloses an opto-electronic data carrier, especially a compact disk (CD) digital versatile disk (DVD) etc. which has a transponder and/or a transponder antenna. The transponder and/or the transponder antenna can be mounted asymmetrically or symmetrically to a center of the data carrier with a given ratio of overlapping of an applied or mounted reflection layer and the non-reflecting regions on at least one surface of the data carrier. Further, a method for applying at least one transponder and/or a transponder antenna to an opto-electronic data carrier is disclosed. The transponder may be applied as a label. Said document represent the basis for the preamble of claim 1.

SUMMARY OF THE INVENTION

Accordingly, a principal object of the present invention is to significantly increase the range of disc type RFID systems. Thus, according to the present invention, a combination of a label and an annular disc having the features of claim 1 is provided. Preferred embodiments of the invention are defined in the dependent claims.
Another object of the invention is to provide a practical commercially viable label system for implementing disc type RFID antennas and associated transponders.
In accordance with one illustrative embodiment of the invention, a disc type RFID system may include an outer conventional conducting annular zone with conventional visual, audio or digital information thereon, two dipole elements each extending part way across the conducting annular zone, a transponder element interconnecting the two dipole elements, and with a conducting structure interconnecting the dipoles, covering only a small portion such as a minor fraction of the area of the disc within the annular information zone of the disc.
In operation, the embodiments act like a folded dipole antenna at lower UHF frequencies such as 915 megahertz (MHz) and as a form of monopole or dipole antenna at higher (SHF) frequencies such as 2.45 gigahertz (GHz). With both of these configurations, the conventional information bearing annular conducting zone forms part of the large area radiating structure, with the result that the range of the transponder system is increased by two or three times the range of the prior art arrangements.
In accordance with another aspect of the invention, antenna may be formed by conductive paint such as silver paint, applied to a multilayer label, and the label may be printed with conductive paint or ink and visual material prior to application to the CD disc. More specifically, the label may include a release coated liner sheet and an overlying intermediate sheet, with pressure sensitive adhesive between the two sheets, and an opening to receive the transponder. The antenna elements may be printed on the second sheet and electrically coupled to the transponder. The label is completed with the addition of a thin face stock sheet which covers the antenna and transponder, and which may include the usual advertising and information about the contents of the disc. Incidentally, the antenna elements may be included in the label in any convenient way, by conductive ink, paste or paint, by an etching process or by die cutting a thin conductive sheet, for examples.
More than one CD label of this configuration may be included on a single master sheet and fed through a printer, such as an ink jet or laser printer. Following printing, the individual multi-layer CD labels may be separated from the master sheet, and applied to the CD or DVD following removal of the release coated liner sheet and exposure of the pressure sensitive adhesive. Alternatively, the CD labels may be produced in roll form, by roll-to-roll processing.
Advantages of the present disc antenna configuration include substantial extension of the coupling range, and the provision of a consistent radiation coupling pattern. In this regard the radiation coupling pattern of the prior art device, with its circular radiation slot, was not clearly defined and included null zones; while the antenna radiation pattern of the present design is free of these problems. In addition, the range of an antenna is dependent to a substantial degree on size, and the above described prior art device has a relatively small diameter peripheral slot as the main radiation structure, while the present antenna structural configurations essentially extend the radiating antenna to the entire outer conductive zone of the disc.

In accordance with another aspect of the invention, an RFID system includes: a disc having a conductive layer in an outer annular zone, a central mounting opening and an inner annular zone between said central opening and said outer conductive annular zone; a transponder mounted on said disc; antenna elements mounted on said disc and extending in opposite directions, said antenna elements being electrically coupled to said transponder; and said inner annular zone being free of conductive material in that portion of said inner annular zone adjacent said conductive layer in said outer zone. Radiant energy is coupled to and from said disc primarily from said antenna elements and said conductive outer annular zone.

In accordance with yet another aspect of the invention, an RFID system includes: a disc having a conductive layer in an outer annular zone, a central mounting opening, and an inner annular zone between said central opening and said outer conductive annular zone; a transponder mounted on said disc in said inner annular zone; antenna elements extending in opposite directions, electrically coupled to said transponder; said antenna elements extending outward and terminating between one quarter and three quarters of the way across said outer annular zone; and said inner annular zone having the greater part of its area free of conductive material. Radiant energy is coupled to and from said disc primarily from said antenna elements and said conductive outer annular zone.

In accordance with still another aspect of the invention, an RFID label is for use with a disc having a conductive layer in an outer annular zone, a central mounting opening and an inner annular zone between said central mounting opening and said outer conductive annular zone; said label including: a plurality of layers including a release coated liner; a base layer with a layer of pressure sensitive adhesive between said liner and said base layer; and a face stock layer overlying said base layer; said label having a shape corresponding to the shape of a disc, with an outer annular zone and an inner annular zone corresponding to the outer zone and the inner zone; said base layer having an opening or recess for a chip, extending through said base layer; a transponder chip mounted on said label in said opening or recess; antenna elements extending in opposite directions, electrically coupled to said transponder; said antenna elements extending outward at least part way across said outer annular zone of said label; and said antenna elements being formed of conductive material located between said base layer and said face stock layer.

In accordance with a further aspect of the invention, an RFID system includes: an annular disc having a central hole therein, and including an annular conductive material surrounding the central hole; a transponder; and antenna elements. The antenna elements are electrically coupled to the transponder. The antenna elements at least partially overlie the conductive material of the disc. The antenna elements are capacitively coupled to the conductive material. Radiant energy is coupled to and from the system primarily from the antenna elements and the annular conductive material.

In accordance with a still further aspect of the invention, a label for use with an annular disc having a central hole therein, and including inner and outer annular portion surrounding the central hole, the outer annular portion having an annular conductive material, and the inner portion being substantially free of conductive material, includes: a face stock layer; a transponder; antenna elements electrically coupled to the transponder; a base layer; and an adhesive layer attached to the base layer for adhesively coupling the label to the disc. The antenna elements and the transponder are between the adhesive layer and the face stock layer.

In accordance with another aspect of the invention, an RFID system includes an annular disc that includes: an inner annular portion surrounding a central hole; and an outer annular portion surrounding the inner annular portion; and a transponder. The outer annular portion includes an annular conductive material. The transponder is electrically coupled to the annular conductive material, such that the annular conductive material functions as at least part of an antenna structure in conjunction with the transponder.

Other objects, features and advantages will become apparent from a consideration of the following detailed description and from the accompanying drawings.

BRIEF DESCRIPTION OF THE DRAWINGS

In the annexed drawings, which are not necessarily to scale:

Fig. 1 is a diagrammatic showing of an RFID system for use with CD or DVD discs;

Fig. 2 is a plan view of a first embodiment disc and RFID transponder antenna construction illustrating principles of the invention;

Fig. 3 is a plan view of a second embodiment disc and RFID transponder antenna construction illustrating principles of the invention;

Fig. 4 is a plan view of a third embodiment disc and RFID transponder antenna construction illustrating principles of the invention;

Fig. 5 is a schematic representation of operative parts of the system of Fig. 4;

Fig. 6 is a diagram showing an equivalent circuit of the system of Fig. 4;

Fig. 7 is a plan view of a multi-layer label construction for implementing the RFID constructions shown in Figs. 2-4;

Fig. 8 is a cross-sectional view along line 8-8 of Fig. 7

Fig. 9 is a plan view of another embodiment disc and RFID transponder antenna configuration in accordance with the present invention;

Fig. 10 is a plan view of yet another embodiment disc and RFID transponder antenna configuration in accordance with the present invention;

Fig. 11 is a plan view of still another embodiment disc and RFID transponder antenna configuration in accordance with the present invention;

Fig. 12 is a plan view of a further embodiment disc and RFID transponder antenna configuration in accordance with the present invention;

Fig. 13 is a plan view of a still another embodiment disc and RFID transponder antenna configuration in accordance with the present invention;

Fig. 14 is a plan view of a label having an antenna structure in accordance with the present invention; and

Fig. 15 is a plan view of disc having a built-in RFID system, in accordance with an aspect of the present invention.

DETAILED DESCRIPTION

Before describing the drawing figures, certain background information will be noted. Specifically, the well-known relationship between frequency and wavelength may be noted as follows:

$$L = c/F \qquad (1)$$

$$F = c/L \qquad (2)$$

where L is the wavelength, c is the speed of light or electrical signals, equal to about $3 \times 10^{10}$ centimeters per second, and F is the frequency. Using formula (1) set forth above, with a frequency of 915 MHz, the wavelength is approximately 32.78 centimeters (cm) and a half wavelength is about 16.4 cm. With a frequency of 2.45 GHz, or $2.45 \times 10^9$ Hertz, the wavelength is about 12.2 cm, and the half wavelength is about 6.1 cm. Incidentally, the frequency range of from 860 to 960 megahertz is often referenced as the UHF frequency band, and the frequency range of from 2.4 to 2.5 gigahertz or 2.4 to $2.5 \times 10^9$ Hertz is often referred to as the super high frequency (SHF) band.

It is also noted that RFID systems generally are known, and RFID transponder units are widely available from various manufacturers. For completeness and by way of background, the prior publication identified above is hereby incorporated by reference into this specification, along with U.S. Patent No. 5,585,953 and U.S. Patent No. 5,347,280, referenced in the prior printed publication cited hereinabove. These latter references describe various RFID systems. It may be briefly noted that RFID systems normally include a transmitter/receiver unit, and a transponder unit. In response to signals transmitted by the transmitter/receiver unit, the transponder provides a response that is processed by the transmitter/receiver unit. In one simple application, an RFID transponder, attached to a product in a store, may be subject to an interrogating signal at the exit to the store; and if the product has not been paid for, an alert signal or an alarm may be actuated. The transponder unit is preferably powered by rectifying the incoming interrogation signal, but may in some cases include a battery. Various applications other than the simple security application mentioned above may be implemented by the RFID system.

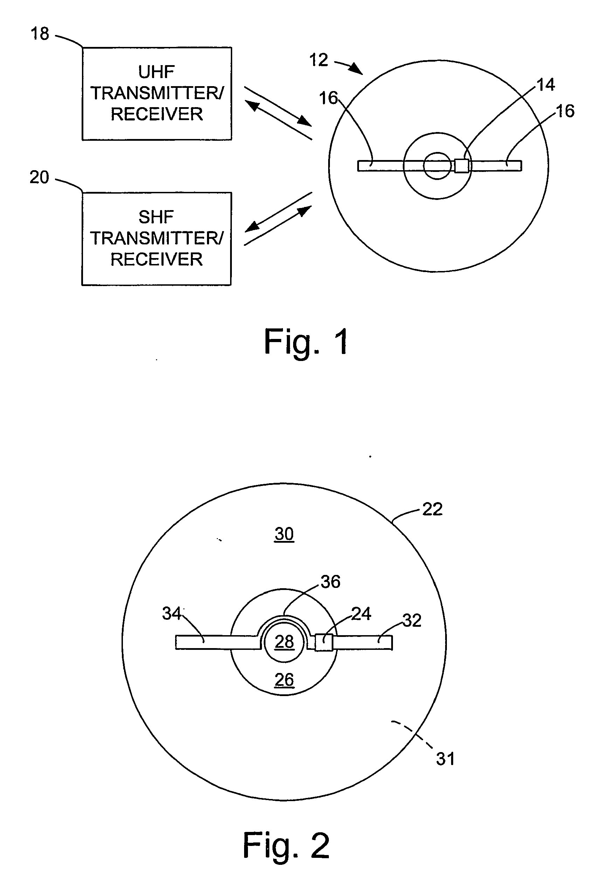

Now, referring more particularly to the drawings, Fig. 1 is a schematic overall view, showing a compact disc 12, with a transponder or chip 14 and antenna elements 16. In addition, transmitter/receiver 18 operating at a UHF frequency, and transmitter/receiver 20 operating at a SHF frequency, are shown transmitting radiant energy signals to the CD disc and receiving the triggered response from transponder element 14.

Fig. 2 is an enlarged showing of a CD disc 22 with the label side up. The transponder or chip 24 is mounted on disc 22 in the inner zone 26, between the central mounting hole or opening 28 and the outer zone 30, which includes the conducting, information-bearing metallic zone or layer 31 of the disc 22 concealed by the label. The layer 31 is also referred to herein as an "annular conductive layer".

In Fig. 2 the two dipole elements 32 and 34 extend in opposite directions from the transponder 24. It may also be noted that the upper dipole antenna element 34 is coupled to the transponder 24 by the thin semi-circular conductor 36. The antenna elements 32 and 34 are capacitively coupled to the conductive layer that is part of the outer zone 30. Direct contact between the antenna elements 32 and 34, and the conductive layer that is part of the outer zone 30, may be prevented by a dielectric material, such as a suitable plastic, that encloses the conductive material 31 within the outer zone 30. The configuration of the antenna elements 32 and 34, and their capacitive coupling with the conductive layer 31 of the outer zone 30, allows radiant energy to be coupled to and from the disc 22 primarily from the antenna elements 32 and 34 and the conductive layer 31.

Concerning dimensions, the disc 22 is of conventional size, about 4.75 inches or almost 12 centimeters in diameter. The dipole elements are about 7 to 8 centimeters, tip to tip, and they are formed of thin strips or layers of conducting material such as copper, about 3 millimeters (about 0.125 inches) wide. The antenna elements extend about half way across the outer zone 30 of the disc 22, and they preferably terminate between about one-quarter and three-quarters of the way across the outer zone 30.

The disc 22 is described above as a CD disc of certain dimensions. However, it will be appreciated that other sorts of discs having an electrical conductive medium. Digital Versatile Discs (DVDs) are one example of an alternative disc, having substantially a metallic medium and substantially the same dimensions as a CD. Metal-based discs of other dimensions are also alternatives. One example is a minidiscs having a polycarbonate data storage medium, and an overall diameter of about 64 mm (2.5 inches). Another example is video game discs having an overall diameter of about 8 cm.

A number of different RFID transponder chips may be used, including chips sold under the names Matrics, INTERMEC, and HSL chips by Phillips. These RFID chips may have different impedances, and the associate conductive paths may be broadened or narrowed to provide improved impedance matching.

However, it is preferable not to have the connecting portion of the antenna structure occupy most of the inner area 26, or to have these connecting elements closely adjacent the outer zone 30, because if there is only a narrow gap between the antenna conducting structure and the outer conducting zone, it will form a local slot antenna of reduced size. This would detract from the desired dipole action and reduce the range of the transponder system. Accordingly, the antenna connecting structure should be close to the central hole 28 to minimize local slot type radiation.

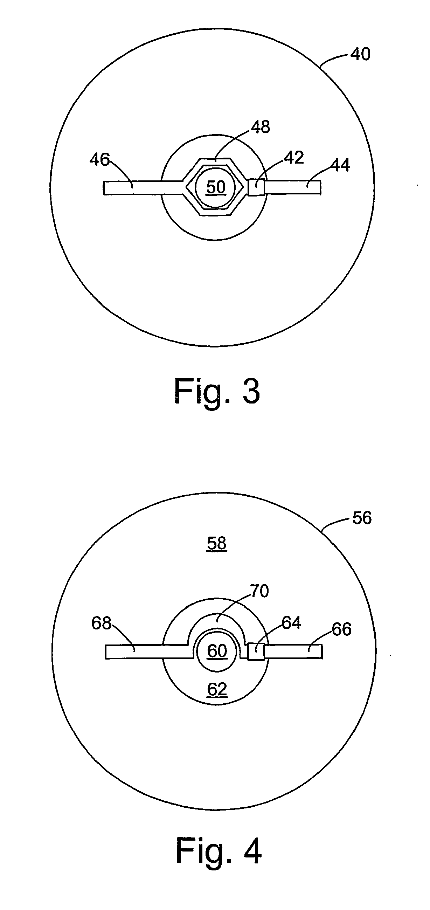

Fig. 3 shows an alternative disc assembly 40 with an RFID chip or transponder 42 and oppositely extending dipole elements 44 and 46. The interconnection 48 between the dipole elements is hexagonal in configuration, close to the central hole 50, and providing parallel mechanically balanced paths from the RFID chip 42 to the lower dipole element 46. This type of balanced mechanical structure is desirable to avoid vibration and/or distortion during highspeed rotation of the disc as it is being read.

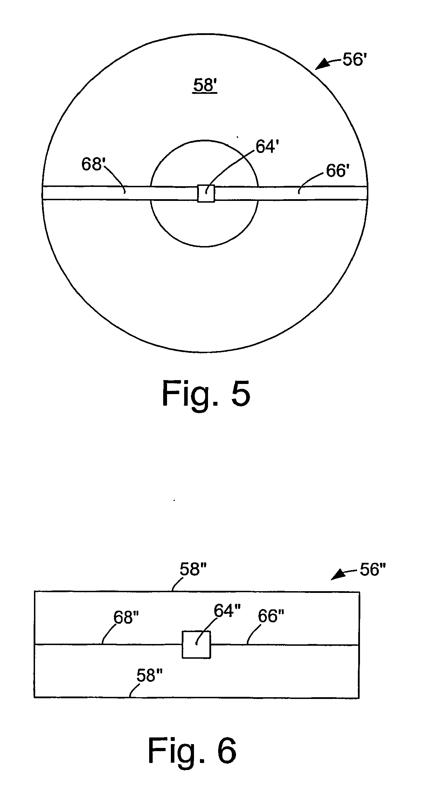

Fig. 4 shows a further embodiment of the invention, and Figs. 5 and 6 are diagrams indicating the mode of operation of the RFID construction. Initially, considering Fig. 4, it shows an RFID disc assembly 56, with the disc having an outer metallized annular zone 58, a central mounting hole 60, and an inner zone or area 62 between the hole 60 and the outer metallized zone 58. The transponder chip is mounted on the inner zone 62, and has two dipole elements 66 and 68 extending in opposite directions to points about half way across the outer metallized zone 58. A generally crescent shaped conductive element 70 couples the RFID chip to the antenna element 68. The element 70 has been made to have somewhat greater area to provide a better impedance match with the RFID transponder 64, than was obtained with a plain narrow conductive strip.

Tapered shapes of varying width, such as the crescent-shape conductive element 70, may improve the bandwidth of the connection between the interconnect and an antenna element. It will be appreciated that a vary of suitable shapes having a non-uniform width may be employed. Further, it will be appreciated that interconnects having a non-uniform width may be utilized with the other embodiments described herein.

Turning now to the mode of operation, we will consider operation at UHF and at SHF frequency bands. At the UHF frequency of 915 MHz, the wavelength is about 32.78, with the half wavelength being about 16.39 centimeters. At the SHF frequency of 2.45 GHz, the wavelength is about 12.24 cm and the half wavelength is about 6.12 cm.

It is also noted that a normal dipole antenna (in the absence of supplemental conducting material or significant deviations from physical linearity) is one-half wavelength in length.

Considering first the SHF interrogation signal at the 2.45 GHz frequency, the half wavelength is about 6.12 centimeters. In the arrangements of Fig. 4 the tip-to-tip distance of the dipole elements was about 7 cm, (with the disc being about 11 cm in diameter). Under these conditions, and in the presence of the capacitively coupled outer metallized zone, good coupling between the RFID elements and the external transmitter/receiver was obtained.

In the case of the lower frequency UHF signals a double folded dipole mode of operation was achieved, with the half wavelength of 16 plus centimeters being accommodated by the folded dipole effect obtained by the capacitive coupling of the antenna elements to the metallized outer zone of the disc.

Figs. 5 and 6 indicate what is believed to be the mode of operation of the antenna system of Fig. 4 at the lower UHF frequency, with corresponding elements being designated by primed reference numerals in Fig. 5 and by double primed elements in Fig. 6. The showing of Fig. 6 is a double version of a conventional folded dipole structure and provides good extended range coupling to the transmitter/receiver, and good impedance matching to the RFID chip. Incidentally, the radiation pattern of the embodiments of Figs. 2-4 is essentially a simple major lobe with maximum reduction coupling substantially along the axis perpendicular to the centre of the disc.

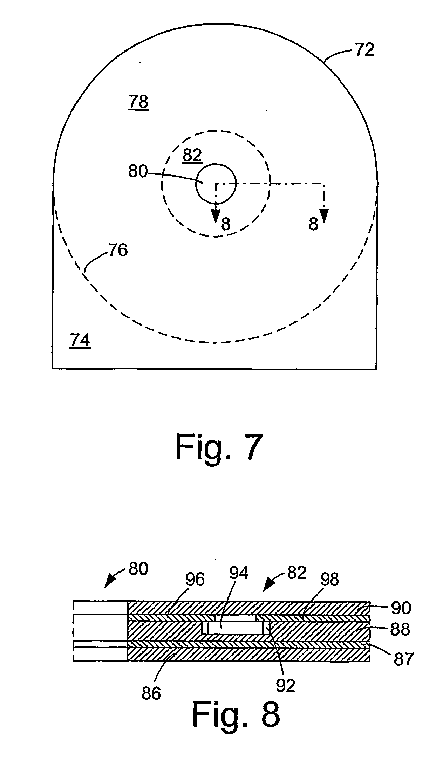

Figs. 7 and 8 show a multiple layer label which may be employed to implement the RFID system of Figs. 1 through 6 of this specification, as well as other embodiment RFID systems described below. Incidentally the overall label outline configuration of Fig. 7 is shown in U.S. Patent No. 5,715,934. In Fig. 7, the label includes the central label area and the locating area 74 secured to the main label area 72 by perforations. The main area 72 has pressure sensitive or other suitable adhesive thereon, which is exposed when a released coated liner is removed; and the area 74 of the label has no exposed adhesive so that it may be employed to locate the label from the enclosing CD box, and then separate therefrom along perforations 76.

The main label 72 has areas corresponding to those of a CD or DVD, with an outer annular area 78 corresponding to the metallized layer of a CD or DVD, a central hole or opening 80, and an inner annular area 82 between the hole an the outer area 78.

Fig. 8 is a partial cross-sectional view taken along lines 8-8 of Fig. 7. In Fig. 8 the lower layer 86 is a release layer covering an adhesive layer 87, and the two other layers of the multilayer label include a base layer 88 and the top or face stock layer 90. The base layer 88 has a recess or die cut opening 92 and an RFID transponder 94 is mounted in the recess. Antenna elements 96 and 98 preferably formed of conductive ink, paint or paste, are connected to the chip or transponder 94 and extend in opposite directions from the chip as disclosed in Figs. 2 through 4 of the drawings. The face stock sheet 90 may be adhesively bonded to the base layer 88. Instead of using conductive ink, paint or paste, the antenna elements may be formed by die cutting a thin conductive sheet, by etching or by alternative deposition methods.

As noted above, the adhesive layer 87 may include a pressure sensitive adhesive. Alternatively, other types of adhesives may be used in the adhesive layer 87. Examples of other types of adhesives include suitable epoxies, hot melt adhesives, and cyanocrylates. It may be advantageous for the adhesive to be strong enough to bond the label 72 to the disc permanently, such that removal of the label may involve destruction of the disc. Effectively permanent coupling of the label to the disc may be advantageous where there is concern about attempts to remove the label or render it unreadable, such as when RFID system is being used as an anti-theft device, for instance.

Conversely, it may be advantageous in other applications for all or part of the label 72 to be adhered using a low tack, low residue adhesive, such as the adhesive used in POST-IT brand notes. For instance, either the entire label 72, or the portion of the label 72 containing the transponder 94, may be easily removable without damage to or residue on the underlying disc. It may be advisable to have all or part of the label 72 be removable for various applications of the RFID system, such as for stock control, anti-theft, and anti-counterfeiting applications.

It is preferable that the multilayer label 72 be fairly thin, less than 0.38 mm (0.015 inches) thick, and preferably less than 0.30 mm (0.012 inches) thick, for ease in feeding through a laser or ink jet printer to provide visual information on the face stock layer 90. It is contemplated that more than one label could be mounted on a master sheet, imprinted in a printer, and then separated and applied to CDs. With the new RFID chips being very thin, only 0.2 mm (0.008 inches) or less thick, the multilayer label sheets with the RFID chip in place, could be printed with the chip as part of the assembly.

It will be appreciated that, as an alternative to being parts of a label, the transponder, antenna elements, and other components of the RFID system may be incorporated in a disc, for example in the disc manufacturing process. As background, compact discs are typically made of multiple separate layers. First is a soft clear plastic layer that provides a majority of the disc's thickness and weight. The layer protects the data layer from damage on the play side, and acts a lens to focus light on the data layer. Second is the data layer that is molded or pressed onto the clear plastic layer. A reflective metallic layer is located on top of the data layer, and allows the disc to function like a mirror, reflecting back laser light that has passed through the data layer. This metallic layer is the annular conductive layer referred to elsewhere herein. A fourth layer, a thin, hard protective plastic coating, is provided on the reflective metallic layer to provide strength and protection, and to provide a surface upon which a label layer may be printed. The label layer may contain text, graphics, or pictorial elements.

The various configurations for the antenna elements, transponders, and interconnections described herein may be included in a disc as part of the manufacturing process of the disc. For instance, the antenna elements and interconnect may be printed in conductive ink on the hard plastic coating of the disc, with the transponder placed appropriately to couple it to antenna elements and the interconnect. The transponder placed in the disc may be part of a thin strap or interposer, with conductive leads that couple to the interconnect and/or the antenna elements.

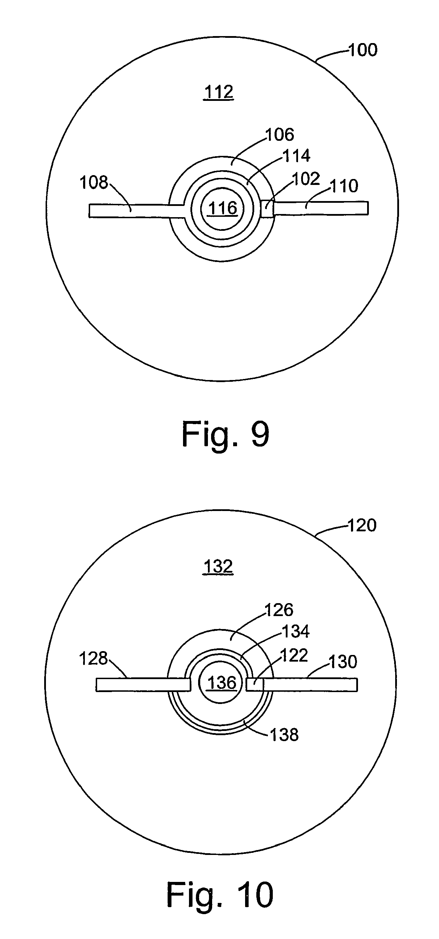

Fig. 9 shows another alternative configuration, with a disc 100 having an RFID transponder or chip 102 on an inner annular portion 106 of the disc 100. A pair of antenna elements 108 and 110 are coupled to the chip 102, and extend onto an outer annular portion 112 of the disc 100. As with the other embodiments described herein, the extension of the antenna elements 108 and 110 onto the outer portion 112 operatively couples the antenna elements 108 and 110 to the metallized part of the outer portion 112.

An interconnection 114 on the inner portion 106 is used in coupling the antenna elements 108 and 110 to the RFID chip 102. The interconnection 114 includes a dual path between the chip 102 and the antenna element 108, around both sides of a central hole 116 of the disc 100.

Fig. 10 illustrates a configuration that employs a shunt inductor. A disc 120 has an RFID transponder or chip 122 on an inner annular portion 126, and antenna elements 128 and 130 that extend onto an outer annular portion 132. The antenna element 128 is coupled to the chip 122 by a conductive interconnection 134 that is on the inner portion 126 on one side of a central hole 136.

A conductive shunt 138 couples the antenna elements 128 and 130 together. The shunt 138 acts as a shunt inductor between the antenna elements 128 and 130. The shunt 138 is on the inner portion 126, and runs along a side of the central hole 136 that is opposite to the side that the interconnection 134 is on. Thus the interconnection 134 and the shunt 138 are diametrically opposed on opposite sides of the central hole 136. However, it will be appreciated that other configurations of the interconnection 134 and the shunt 138 may be used.

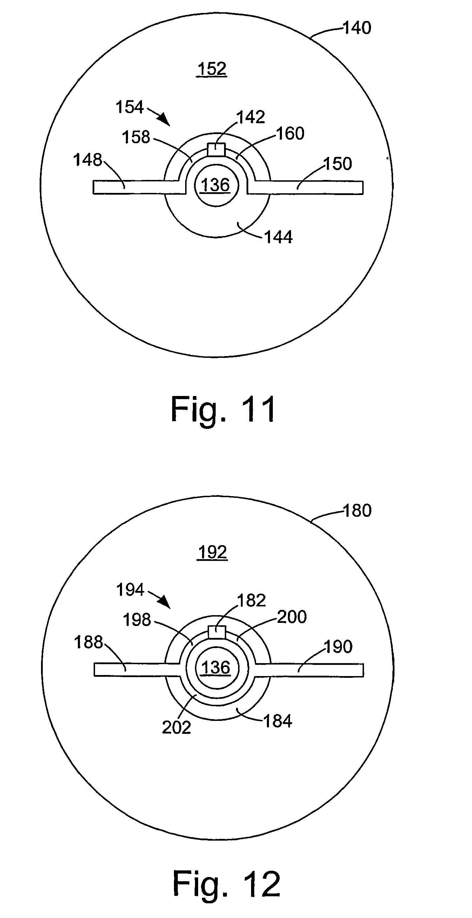

Fig. 11 shows a configuration with a disc 140 having an RFID transponder or chip 142 on an inner annular portion 144, with the chip 142 centrally located substantially equidistant between antenna elements 148 and 150 that extend onto an outer annular portion 152 of the disc 140. An interconnection 154 on the inner portion 144 includes a pair of interconnection portions 158 and 160. The interconnection portion 158 couples the antenna element 148 to the chip 142. Similarly, the interconnection portion 160 couples the antenna element 150 to the chip 142. The interconnection portions 158 and 160 may have substantially the same length, and may have substantially the same electrical characteristics. Since the antenna elements 148 and 150 may be substantially identical, and may have substantially identical electrical characteristics, the operating characteristics of the RFID system may be substantially balanced on both sides of the chip 142.

Fig. 12 shows a disc 180 that has a configuration that combines the balanced characteristics of the disc 140 (Fig. 11) with the shunt configuration of the disc 120 (Fig. 10). The disc 180 has a centrally-located RFID transponder or chip 182 on an inner portion 184, with antenna elements 188 and 190 that extend onto an outer portion 192 of the disc 180. The chip 182 and an interconnection 194 are on one side of a central hole 196 of the disc 180, with interconnection portions 198 and 200 coupling the chip 182 to respective antenna elements 188 and 190. A shunt 202 on an opposite side of the central hole 196 operates as a shunt inductor by coupling the antenna elements 188 and 190.

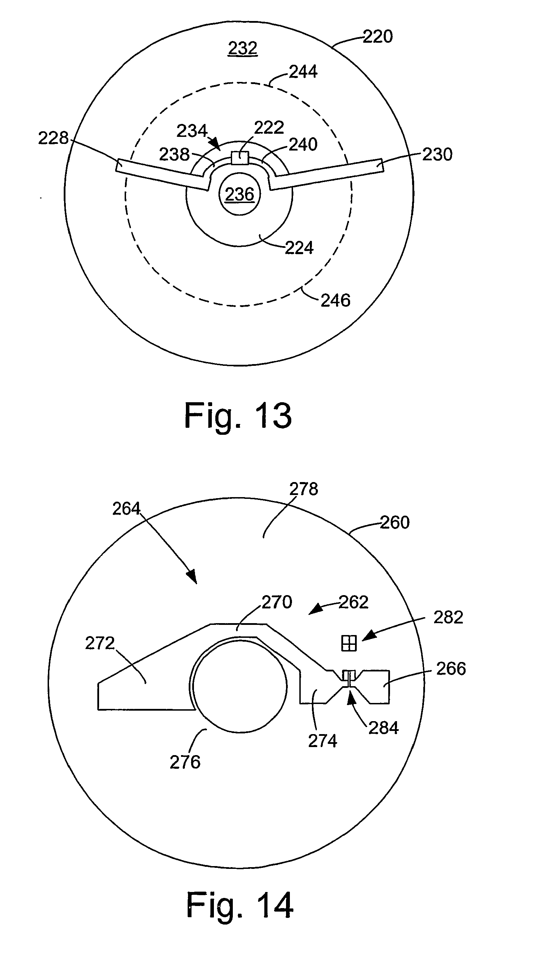

Turning now to Fig. 13, a disc 220 includes a transponder or chip 222 on an inner portion 224, and antenna elements 228 and 230 that extend onto an outer portion 232. The antenna elements 228 and 230 are coupled to the chip 222 by respective portions 238 and 240 of an interconnection 234. The antenna elements 228 and 230 may have different lengths, and may be not in line with one another across a central hole 236 of the disc 220. That is, the antenna elements 228 and 230 at an angle with regard to one another. Thus a path 244 between the antenna elements 228 and 230 through the outer portion 232 one side of the central hole 236 has a different length than a path 246 between the elements 228 and 230 on the other side of the central hole 236. Having the two paths 244 and 246 be of different lengths allows the configuration to have a double resonance. The system may be configured so that the double resonance may be set so that the system may operate at different desired frequencies. For example, one of the paths may be configured such that the system may be operated in a band centered on 915 MHz, for use in the United States, and the other (longer) path arranged to act as an antenna at 869 MHz, for use in Europe.

Fig. 14 shows a label 260 with an antenna structure 262. The antenna structure 262 includes antenna elements 264 and 266 and a conductive material interconnect 270. The interconnect 270 couples together portions 272 and 274 of the antenna element 264. The interconnect 270 is primarily located on an inner annular portion 276 of the label 260 that is configured to overlie an inner annular portion of a disc when the label 260 is attached to the disc. The antenna elements 264 and 266 are primarily located on an outer annular portion 278 of the label 262 that is configured to overlie an outer annular portion of a disc when the label 260 is attached to the disc. Alignment marks 282 aid in positioning of a transponder at a mounting position 284, to couple the transponder or chip to the antenna elements 264 and 266.

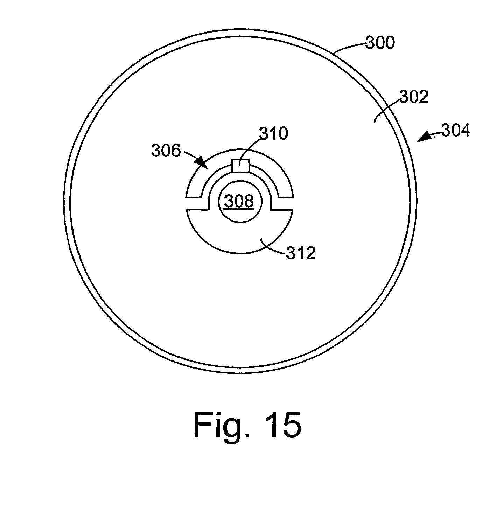

Fig. 15 shows a disc 300 that has a built in RFID system. The disc 300 has an annular conductive material 302, such as a metallic reflective layer, in an outer annular portion 304. A conductive interconnect 306, on one side of a central hole 308 of the disc 300, is coupled to the annular conductive material 302, to allow the annular conductive material 302 to be coupled to a transponder 310, in the form of a chip or a strap or interposer. The conductive interconnect 306 is at least in part in an inner annular portion 312 of the disc 300, which is normally substantially free of conductive material. By electrically conductively coupling the transponder 312 to the annular conductive material 302, the annular conductive material 302 may be made to function as an antenna. This is a direct coupling of the transponder 310 to the disc's conductive material 302, in contrast to the capacitive coupling described above with regard to other embodiments.

The interconnect 306 may be a unitary and continuous part of the same conductive layer that includes the annular conductive material 302. The conductive traces of the interconnect 306 may be formed by a suitable masking process to produce the desired shape of conductive material.

It will be appreciated that many of the features described above with regard to the various capacitive coupling embodiments may also be utilized with direct coupling embodiments.

While the specification describes particular embodiments of the present invention, various alternatives may be employed without departing from the spirit and scope of the invention. Thus, by way of example and not of limitation, the transponder chip may be mounted centrally near the central hole with antenna stubs of equal length extending therefrom; the antenna stubs need not extend precisely along a single line; the inter-connection between the two antenna stubs may be formed by two parallel similar or different conductive paths on opposite sides of the central hole; with impedance matching in some cases requiring different conductor arrangements for optimum impedance matches.

Further, the impedance may be varied by changing the width of the conductor or conductors interconnecting the two antenna elements, or by shifting their positions in the inner zone of the disc. Accordingly the present invention is not limited precisely to the embodiments shown in the drawings and described in detail hereinabove.

The systems described herein may be used in any of a wide variety of applications. One possible use is for inventory of discs in a store. Another possible use is in identifying and tracking discs as they are moved between locations, such as in an office environment.

Another possible use is for verifying and preventing theft or unauthorized use of software. An RFID device on or in a disc of software being sold could be read at a point of sale such as a cash register or checkout. Data from the RFID device, such an EPC code, could then be transmitted to a manufacturer's website. There the data could be processed and authenticated, and a code could be returned to allow use of the software. The code, which could be printed on a sales receipt, for example, could be required by the customer in order to install and/or run the software. Use of such a system could facilitate prevention of theft, since possession of the disc alone, without going through the purchase process, would be of no value. In addition, such a system may aid in preventing counterfeiting, since authorization by the manufacturer may be required before completion of the purchase process. It will be appreciated that an automatic authorization process, such as that described above, may be preferable from the point of view of the consumer, since separate authorization steps may be avoided. Further, it will be appreciated that such a process may provide additional information to a seller that may otherwise not be available, for instance regarding times and locations of product sales.

Although the invention has been shown and described with respect to a certain embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

**Claims**

1. A combination of a label (72, 260) and an annular disc (12, 22, 40, 56, 100, 120, 140, 180, 220) having a central hole (28, 50, 60, 116, 136, 196, 236) therein, and including inner and outer annular portions (26, 62, 106, 126, 144, 184, 224 and 30, 58, 112, 132, 152, 192, 232) surrounding the central hole (28, 50, 60, 116, 136, 196, 236), the outer annular portion (26, 62, 106, 126, 144, 184, 224 and 30, 58, 112, 132, 152, 192, 232) having an annular conductive material (31), and the inner portion being substantially free of conductive material, the label (72, 260) comprising:

   a face stock layer (90);
   a transponder (14, 24, 42, 64, 94, 102, 122, 142, 182, 222);
   antenna elements (16, 32, 34, 44, 46, 66, 68, 96, 98, 108, 110, 128, 130; 148, 150, 188, 190, 228, 230, 264, 266) electrically coupled to the transponder (14, 24, 42, 64, 94, 102, 122, 142, 182, 222);
   a base layer (88); and
   an adhesive layer (87) attached to the base layer (88) for adhesively coupling the label (72, 260) to the disc (12, 22, 40, 56, 100, 120, 140, 180, 220);

   wherein the antenna elements (16, 32, 34, 44, 46, 66, 68, 96, 98, 108, 110, 128, 130, 148, 150, 188, 190, 228, 230, 264, 266) and the transponder (14, 24, 42, 64, 94, 102, 122, 142, 182, 222) are between the adhesive layer (87) and the face stock layer (90); wherein the antenna elements (16, 32, 34, 44, 46, 66, 68, 96, 98, 108, 110, 128, 130, 148, 150, 188, 190, 228, 230, 264, 266) at least in part overlie the outer annular region when the label (72, 260) is adhesively coupled to the disc (12, 22, 40, 56, 100, 120, 140, 180, 220), to thereby capacitively couple to the annular conductive material (31) of the disc (12, 22, 40, 56, 100, 120, 140, 180, 220);
   **characterized in that**
   the label (72, 260) includes an interconnection (36, 48, 70, 114, 134, 154, 194, 234, 278) of conductive material conductively coupling the transponder (14, 24, 42, 64, 94, 102, 122, 142, 182, 222) that is mounted in the inner portion and at least part of at least one of the antenna elements (16, 32, 34, 44, 46, 66, 68, 96, 98, 108, 110, 128, 130, 148, 150, 188, 190, 228, 230, 264, 266); and
   wherein the interconnection overlies the inner portion of the disc (12, 22, 40, 56, 100, 120, 140, 180, 220).

2. The combination of claim 1, wherein the adhesive layer (87) includes a pressure sensitive adhesive.

**3.** The combination of claim 1 or claim 2, wherein the transponder (14, 24, 42, 64, 94, 102, 122, 142, 182, 222) is in a recess (92) in the base layer (88).

**4.** The combination of any of claims 1 to 3, wherein the antenna elements (16, 32, 34, 44, 46, 66, 68, 96, 98, 108, 110, 128, 130, 148, 150, 188, 190, 228, 230, 264, 266) are between the base layer (88) and the face stock layer (90).

**5.** The combination of any of claims 1 to 4, wherein the antenna elements (16, 32, 34, 44, 46, 66, 68, 96, 98, 108, 110, 128, 130, 148, 150, 188, 190, 228, 230, 264, 266) are substantially co-linear with one another, diametrically opposed on opposite sides of the central hole (28, 50, 60, 116, 136, 196, 236).

**6.** The combination of any of claims 1 to 4, wherein the antenna elements (16, 32, 34, 44, 46, 66, 68, 96, 98, 108, 110, 128, 130, 148, 150, 188, 190, 228, 230, 264, 266) are angled with respect to one another.

**7.** The combination of any of claims 1 to 6, wherein the antenna elements (16, 32, 34, 44, 46, 66, 68, 96, 98, 108, 110, 128, 130, 148, 150, 188, 190, 228, 230, 264, 266) are configured to extend outward and terminate between one quarter and three quarters of the way across the outer annular portion (26, 62, 106, 126, 144, 184, 224 and 30, 58, 112, 132, 152, 192, 232).

**8.** The combination of any of claims 1 to 7, further comprising a conductive shunt (138, 202) that electrically couples the antenna elements (16, 32, 34, 44, 46, 66, 68, 96, 98, 108, 110, 128, 130, 148, 150, 188, 190, 228, 230, 264, 266) together.

**9.** The combination of claim 8, wherein the conductive shunt overlies the inner portion of the disc (12, 22, 40, 56, 100, 120, 140, 180, 220).

**10.** The combination of any of claims 1 to 9, wherein the antenna elements (16, 32, 34, 44, 46, 66, 68, 96, 98, 108, 110, 128, 130, 148, 150, 188, 190, 228, 230, 264, 266) are dipole antenna elements.

**Patentansprüche**

**1.** Kombination eines Labels (72, 260) und einer runden Disc (12, 22, 40, 56, 100, 120, 140, 180, 220), welche ein zentrales Loch (28, 50, 60, 116, 136, 196, 236) darin aufweist und innere und äußere runde Abschnitte (26, 62, 106, 126, 144, 184, 224 und 30, 58, 112, 132, 152, 192, 232) umfasst, welche das zentrale Loch (28, 50, 60, 116, 136, 196, 236) umgeben, wobei der äußere runde Abschnitt (26, 62, 106, 126, 144, 184, 224 und 30, 58, 112, 132, 152, 192, 232) ein rundes leitendes Material (31) aufweist und der innere Abschnitt im Wesentlichen frei von leitendem Material ist, wobei das Label (72, 260) umfasst:

eine Druckträgerschicht (90);
einen Transponder (14, 24, 42, 64, 94, 102, 122, 142, 182, 222);
Antennenelemente (16, 32, 34, 44, 46, 66, 68, 96, 98, 108, 110, 128, 130, 148, 150, 188, 190, 228, 230, 264, 266), welche elektrisch mit dem Transponder (14, 24, 42, 64, 94, 102, 122, 142, 182, 222) verbunden sind;
eine Basisschicht (88); und
eine Klebemittelschicht (87), welche an der Basisschicht (88) befestigt ist, um das Label (72, 260) an der Disc (12, 22, 40, 56, 100, 120, 140, 180, 220) klebend zu befestigen;

wobei sich die Antennenelemente (16, 32, 34, 44, 46, 66, 68, 96, 98, 108, 110, 128, 130, 148, 150, 188, 190, 228, 230, 264, 266) und der Transponder (14, 24, 42, 64, 94, 102, 122, 142, 182, 222) zwischen der Klebemittelschicht (87) und der Datenträgerschicht (90) befinden;
wobei die Antennenelemente (16, 32, 34, 44, 46, 66, 68, 96, 98, 108, 110, 128, 130, 148, 150, 188, 190, 228, 230, 264, 266) zumindest teilweise die äußere runde Region überlagern, wenn das Label (72, 260) klebend an der Disc (12, 22, 40, 56, 100, 120, 140, 180, 220) befestigt ist, um dabei kapazitiv mit dem runden leitenden Material (31) der Disc (12, 22, 40, 56, 100, 120, 140, 180, 220) zu koppeln;
**dadurch gekennzeichnet, dass**
das Label (72, 260) eine Zwischenverbindung (36, 48, 70, 114, 134, 154, 194, 234, 278) aus leitendem Material umfasst, welche den Transponder (14, 24, 42, 64, 94, 102, 122, 142, 182, 222), welcher in dem inneren Abschnitt montiert ist, und zumindest einen Teil zumindest eines Antennenelements (16, 32, 34, 44, 46, 66, 68, 96, 98, 108, 110, 128, 130, 148, 150, 188, 190, 228, 230, 264, 266) leitend koppelt; und wobei die Zwischenverbindung den inneren Abschnitt der Disc (12, 22, 40, 56, 100, 120, 140, 180, 220) überlagert.

**2.** Kombination nach Anspruch 1, wobei die Klebeschicht (87) einen Haftkleber bzw. ein drucksensitives Klebemittel beinhaltet.

**3.** Kombination nach Anspruch 1 oder Anspruch 2, wobei sich der Transponder (14, 24, 42, 64, 94, 102, 122, 142, 182, 222) in einer Aussparung (92) in der Basisschicht (88) befindet.

**4.** Kombination nach einem der Ansprüche 1 bis 3, wobei sich die Antennenelemente (16, 32, 34, 44, 46, 66, 68, 96, 98, 108, 110, 128, 130, 148, 150, 188, 190, 228, 230, 264, 266) zwischen der Basisschicht (88) und der obersten Datenschicht (90) befinden.

5. Kombination nach einem der Ansprüche 1 bis 4, wobei sich die Antennenelemente (16, 32, 34, 44, 46, 66, 68, 96, 98, 108, 110, 128, 130, 148, 150, 188, 190, 228, 230, 264, 266) im Wesentlichen co-linear bzw. parallel bzw. fluchtend zueinander und diametral entgegengesetzt bzw. gegenüberliegend auf entgegengesetzten Seiten des zentralen Lochs (28, 50, 60, 116, 136, 196, 236) befinden.

6. Kombination nach einem der Ansprüche 1 bis 4, wobei die Antennenelemente (16, 32, 34, 44, 46, 66, 68, 96, 98, 108, 110, 128, 130, 148, 150, 188, 190, 228, 230, 264, 266) in einem Winkel zueinander angeordnet sind.

7. Kombination nach einem der Ansprüche 1 bis 6, wobei die Antennenelemente (16, 32, 34, 44, 46, 66, 68, 96, 98, 108, 110, 128, 130, 148, 150, 188, 190, 228, 230, 264, 266) konfiguriert sind, sich nach außen zu erstrekken und zwischen einem Viertel und Dreiviertel des Wegs über den äußeren runden Abschnitt (26, 62, 106, 126, 144, 184, 224 und 30, 58, 112 132, 152, 192, 232) zu enden.

8. Kombination nach einem der Ansprüche 1 bis 7, ferner umfassend einen leitenden Shunt (138, 202), welcher die Antennenelemente (16, 32, 34, 44, 46, 66, 68, 96, 98, 108, 110, 128, 130, 148, 150, 188, 190, 228, 230, 264, 266) elektrisch zusammenkoppelt.

9. Kombination nach Anspruch 8, wobei der leitende Shunt den inneren Abschnitt der Disc (12, 22, 40, 56, 100, 120, 140, 180, 220) überlagert.

10. Kombination nach einem der Ansprüche 1 bis 9, wobei die Antennenelemente (16, 32, 34, 44, 46, 66, 68, 96, 98, 108, 110, 128, 130, 148, 150, 188, 190, 228, 230, 264, 266) Dipolantennenelemente sind.

**Revendications**

1. Combinaison d'une étiquette (72, 260) et d'un disque annulaire (12, 22, 40, 56, 100, 120, 140, 180, 220) ayant un trou central (28, 50, 60, 116, 136, 196, 236) dedans, et incluant des parties annulaires intérieures et extérieures (26, 62, 106, 126, 144, 184, 224 et 30, 58, 112, 132, 152, 192, 232) qui entourent le trou central (28, 50, 60, 116, 136, 196, 236), la partie annulaire extérieure (26, 62, 106, 126, 144, 184, 224 et 30, 58, 112, 132, 152, 192, 232) ayant un matériau conducteur annulaire (31) et la partie intérieure étant sensiblement exempte de matériau conducteur, l'étiquette (72, 260) comprenant :

une couche de matériau de base à face plane (90) ;
un transpondeur (14, 24, 42, 64, 94, 102, 122, 142, 182, 222) ;
des éléments d'antenne (16, 32, 34, 44, 46, 66, 68, 96, 98, 108, 110, 128, 130, 148, 150, 188, 190, 228, 230, 264, 266) couplés électriquement au transpondeur (14, 24, 42, 64, 94, 102, 122, 142, 182, 222) ;
une couche de base (88) ; et
une couche adhésive (87) fixée sur la couche de base (88) pour coupler adhésivement l'étiquette (72, 260) au disque (12, 22, 40, 56, 100, 120, 140, 180, 220) ;

dans laquelle les éléments d'antenne (16, 32, 34, 44, 46, 66, 68, 96, 98, 108, 110, 128, 130, 148, 150, 188, 190, 228, 230, 264, 266) et le transpondeur (14, 24, 42, 64, 94, 102, 122, 142, 182, 222) se trouvent entre la couche adhésive (87) et la couche de matériau de base à face plane (90) ;
dans laquelle les éléments d'antenne (16, 32, 34, 44, 46, 66, 68, 96, 98, 108, 110, 128, 130, 148, 150, 188, 190, 228, 230, 264, 266) recouvrent au moins partiellement la région annulaire extérieure lorsque l'étiquette (72, 260) est couplée adhésivement au disque (12, 22, 40, 56, 100, 120, 140, 180, 220), pour le couplage capacitif de cette manière au matériau conducteur annulaire (31) du disque (12, 22, 40, 56, 100, 120, 140, 180, 220) ;
**caractérisée en ce que** :

l'étiquette (72, 260) inclut une interconnexion (36, 48, 70, 114, 134, 154, 194, 234, 278) de matériau conducteur couplant avec conduction le transpondeur (14, 24, 42, 64, 94, 102, 122, 142, 182, 222) qui est monté dans la partie intérieure et au moins une partie d'au moins un des éléments d'antenne (16, 32, 34, 44, 46, 66, 68, 96, 98, 108, 110, 128, 130, 148, 150, 188, 190, 228, 230, 264, 266) ; et

dans laquelle l'interconnexion recouvre la partie intérieure du disque (12, 22, 40, 56, 100, 120, 140, 180, 220).

2. Combinaison selon la revendication 1, dans laquelle la couche adhésive (87) inclut un adhésif sensible à la pression.

3. Combinaison selon l'une ou l'autre des revendications 1 et 2, dans laquelle le transpondeur (14, 24, 42, 64, 94, 102, 122, 142, 182, 222) est placé dans un évidement (92) dans la couche de base (88).

4. Combinaison selon l'une quelconque des revendications 1 à 3, dans laquelle les éléments d'antenne (16, 32, 34, 44, 46, 66, 68, 96, 98, 108, 110, 128, 130, 148, 150, 188, 190, 228, 230, 264, 266) se trouvent entre la couche de base (88) et la couche de matériau de base à face plane (90).

5. Combinaison selon l'une quelconque des revendications 1 à 4, dans laquelle les éléments d'antenne (16, 32, 34, 44, 46, 66, 68, 96, 98, 108, 110, 128, 130, 148, 150, 188, 190, 228, 230, 264, 266) sont sensiblement colinéaires l'un par rapport à l'autre, opposés diamétralement sur des côtés opposés du trou central (28, 50, 60, 116, 136, 196, 236).

6. Combinaison selon l'une quelconque des revendications 1 à 4, dans laquelle les éléments d'antenne (16, 32, 34, 44, 46, 66, 68, 96, 98, 108, 110, 128, 130, 148, 150, 188, 190, 228, 230, 264, 266) sont en angle l'un par rapport à l'autre.

7. Combinaison selon l'une quelconque des revendications 1 à 6, dans laquelle les éléments d'antenne (16, 32, 34, 44, 46, 66, 68, 96, 98, 108, 110, 128, 130, 148, 150, 188, 190, 228, 230, 264, 266) sont configurés pour s'étendre vers l'extérieur et se terminer entre un quart et trois quarts du trajet en travers de la partie annulaire extérieure (26, 62, 106, 126, 144, 184, 224 et 30, 58, 112, 132, 152, 192, 232).

8. Combinaison selon l'une quelconque des revendications 1 à 7, comprenant en outre une dérivation conductrice (138, 202) qui couple électriquement les éléments d'antenne (16, 32, 34, 44, 46, 66, 68, 96, 98, 108, 110, 128, 130, 148, 150, 188, 190, 228, 230, 264, 266) l'un à l'autre.

9. Combinaison selon la revendication 8, dans laquelle la dérivation conductrice recouvre la partie intérieure du disque (1.2, 22, 40, 56, 100, 120, 140, 180, 220).

10. Combinaison selon l'une quelconque des revendications 1 à 9, dans laquelle les éléments d'antenne (16, 32, 34, 44, 46, 66, 68, 96, 98, 108, 110, 128, 130, 148, 150, 188, 190, 228, 230, 264, 266) sont des éléments d'antenne dipôles.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020175818 A1
- DE 10112899 A1
- EP 0996124 A1
- EP 1302893 A
- US 5585953 A
- US 5347280 A
- US 5715934 A